# FASCICULE DE BREVET EUROPEEN

(11) **EP 2 013 285 B1**
(45) Date de publication et mention de la délivrance du brevet: **21.07.2010**
(21) Numéro de dépôt: 07731911.9
(22) Date de dépôt: 19.04.2007
(51) Int. Cl.: C08L 33/12

(54) **COMPOSITION TRANSPARENTE FILTRANT LES IR**
KLARE IR-FILTERZUSAMMENSETZUNG
CLEAR COMPOSITION FOR IR FILTERING

(30) Priorité: 04.05.2006 FR 0603963
(43) Date de publication de la demande: 14.01.2009
(73) Titulaire: ARKEMA FRANCE, 92700 Colombes (FR)
(72) Inventeur: CHENARD, Jean-Yves, F-64000 Pau (FR); EDERLE, Yannick, F-75011 Paris (FR); BOURRIGAUD, Sylvain, F-64000 Pau (FR); PERY, Stéphanie, F-64150 Mourenx (FR)
(74) Mandataire: Bonnel, Claudine
(86) Numéro de dépôt international: PCT/FR2007/051136
(87) Numéro de publication internationale: WO 2007/128930

(56) Documents cités:
- EP-A- 1 467 249

## Description

La présente invention est relative à une composition transparente filtrant les rayons du proche infrarouge (NIR). Cette composition peut être mise sous la forme d'une plaque qui peut être utilisée dans le domaine du vitrage, notamment du vitrage automobile. L'invention est aussi relative à la plaque, à son procédé de fabrication et à son utilisation dans le domaine du vitrage, notamment du vitrage automobile.

### [Le problème technique]

Certaines automobiles possèdent un toît transparent en verre, souvent teinté en vert ou en gris, filtrant les rayons du proche infrarouge. Ceci permet d'éviter un échauffement important de l'intérieur de l'automobile en cas de fort ensoleillement. Une des contraintes des constructeurs automobiles est de diminuer le poids des véhicules. Une alternative au toît en verre en matière plastique est donc recherchée. Le toît en matière plastique doit présenter de bonnes propriétés filtrantes dans le domaine du NIR (c'est-à-dire entre 800 et 2500 nm) ainsi qu'une grande transparence dans le domaine du visible (entre 400 et 800 nm). Il doit aussi présenter une absorption totale ou partielle du rayonnement solaire dans la bande de longueurs d'onde 200-380 nm (rayons UV). Il est nécessaire de plus que ces propriétés ne se dégradent pas avec le temps, notamment sous l'effet d'une exposition prolongée au soleil ou à l'humidité.

La Demanderesse a mis au point une composition qui présente une grande transparence dans le domaine du visible et de bonnes propriétés filtrantes dans le domaine du NIR. Cette composition peut être utilisée sous forme de plaque en remplacement des plaques en verre filtrant les rayons du proche infrarouge.

### [L'art antérieur]

Le brevet US 5434197 décrit une composition filtrant les rayons du proche infrarouge comprenant comme agent filtrant les infrarouge, le bis(4-dialkylaminothiobenzile) ou bien un complexe phénylènediamine/hexafluoroantimonate obtenue par mélange à chaud d'une résine méthacrylique et de l'agent filtrant. La composition peut contenir aussi une matière colorante sous forme de colorant ou de pigment.

Le brevet européen EP 1228129 B1 décrit une composition filtrant les rayons du proche infrarouge à base d'une matière thermoplastique transparente et d'une phtalocyanine de vanadium ou de cuivre.

La demande américaine US 2003/0215627 A1 décrit une composition filtrant les rayons du proche infrarouge obtenue après dépôt d'un revêtement comprenant des particules de mica/dioxyde de titane sur un matériau transparent.

La demande américaine US 2004/0028920 A1 décrit une composition filtrant les rayons du proche infrarouge obtenue après compoundage à l'état fondu d'un masterbatch avec une résine thermoplastique transparente. Le masterbatch comprend des particules de borure de formule XB₆ (X désignant un métal tel que par exemple le cérium, le néodyme, le samarium ou le lanthane) dispersées dans une résine thermoplastique. Il est précisé que la composition peut aussi contenir des colorants ou des pigments pour obtenir la couleur désirée.

La demande américaine US 2004/00771957 A1 décrit une composition filtrant les rayons du proche infrarouge obtenue par compoundage à l'état fondu d'une résine thermoplastique transparente avec des particules d'hexaborure de formule XB₆. La résine thermoplastique transparente peut être un PMMA homo- ou copolymère. Il est précisé, que la composition peut aussi contenir des colorants ou des pigments pour obtenir la couleur désirée.

Le brevet US 6911254 B2 décrit une composition ayant des propriétés filtrant les rayons du proche infrarouge à base de polybutyrale de vinyle (PVB) et de particules d'hexaborure de lanthane. Cette composition peut être appliquée sur une plaque.

Aucun de ces documents ne décrit la composition selon l'invention ni son procédé d'obtention ni une plaque coulée.

### [Figure]

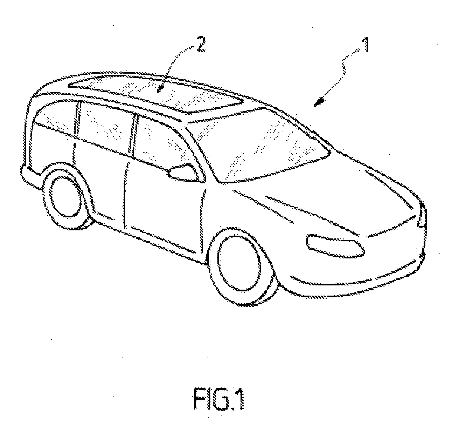

La figure 1 illustre une des utilisations de la plaque selon l'invention. Elle représente un véhicule automobile 1 pourvu d'un toît transparent 2 obtenu à partir de la plaque selon l'invention.

### [Description détaillée de l'invention]

**Le polymère méthacrylique** est un homo- ou copolymère de méthacrylate de méthyle (MAM) comprenant en poids au moins 80%, avantageusement 90%, de MAM. Le copolymère comprend le MAM et au moins un comonomère ayant au moins une insaturation éthylénique copolymérisable avec le MAM par un mécanisme radicalaire.

Le comonomère peut être choisi dans la liste des :
- monomères acryliques de formule CH₂=CH-C(=O)-O-R₁ où R₁ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule CH₂=C(CH₃)-C(=O)-O-R₂ où R₂ désigne un atome d'hydrogène, un groupement alkyle en C₂-C₄₀ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués, l'alphaméthylstyrène, le monochlorostyrène, le tertbutyl styrène.

Le comonomère peut être aussi un agent réticulant c'est-à-dire une molécule ou un oligomère présentant au moins deux insaturations éthyléniques, polymérisables avec le MAM par un mécanisme radicalaire. L'agent réticulant peut être difonctionnel. Il peut s'agir par exemple du di(méth)acrylate d'éthylène glycol, d'hexanediol, de tripropylène glycol, de butanediol, de néopentyl glycol, de diéthylène glycol, de triéthylène glycol, de dipropylène glycol, d'allyle ou de divinyl benzène. L'agent réticulant peut être aussi trifonctionnel. Il peut s'agir par exemple du tri(méth)acrylate de tripropylène glycol, de triméthylol propane, de pentaérythritol. L'agent réticulant peut être aussi tétrafonctionnel, comme par exemple le tétra(méth)acrylate de pentaérythritol ou hexafonctionnel comme l'hexa(méth)acry.late de dipentaerythritol.

Le polymère méthacrylique comprend en poids de 80 à 100%, avantageusement de 90 à 100%, de préférence de 98 à 100%, encore plus préférentiellement de 99 à 100% de MAM pour respectivement de 0 à 20%, avantageusement de 0 à 10%, de préférence de 0 à 2%, encore plus préférentiellement de 0 à 1% d'au moins un comonomère. De préférence, polymère méthacrylique est un copolymère ne comprenant comme monomères que le MAM et au moins un agent réticulant.

De préférence, le polymère méthacrylique a une masse moléculaire en poids (M_{w}) comprise entre 70000 et 4000000 g/mol (étalon PMMA).

**S'agissant de l'agent filtrant dans le proche infrarouge,** il s'agit d'un additif qui a la propriété d'absorber les infrarouges dans la bande de longueurs d'onde 800-2500 nm (NIR) tout en permettant de conserver une bonne transmission dans la bande de longueurs d'onde 380-800 nm.

L'agent filtrant est choisi dans la famille des borures des éléments suivants : La, Pr, Nd, Ce, Gd, Tb, Dy, Ho, Y, Sm, Eu, Er, Tm, Yb, Lu, Sr, Ca, Ti, Zr, Hf, V, Nb, Ta, Cr, Mo et W. De préférence, il s'agit de l'hexaborure de lanthane (LaB₆) qui présente de bonnes propriétés filtrantes. L'agent filtrant est décrit dans les documents suivants : US 2004/0028920**,** US 2004/0071957**,** US 2005/0161642 ou EP 1008564. Ce type d'agent filtrant est préféré aux agents filtrants qui sont des composés organiques tels que par exemple les phtalocyanines car il présente une meilleure résistance au vieillissement ainsi que de meilleures propriétés filtrantes.

Pour favoriser la transparence, la taille des particules de l'agent filtrant est avantageusement inférieure à 200 nm, de préférence inférieure à 100 nm et encore plus préférentiellement comprise entre 1 et 50 nm.

L'agent filtrant pourra comprendre éventuellement un agent dispersant qui a pour fonction de faciliter la dispersion des particules et d'éviter l'agglomération des particules de borure. L'agent dispersant est de préférence de type polymère acrylique. Par exemple, il peut s'agir du SN THICKNER A-850, A-815 de la société San Nopko Ltd ou du DISPERBYK-116 de la société BYK Chemie. L'agent filtrant comprend donc des particules d'hexaborure dispersées dans l'agent dispersant.

Un exemple d'agent filtrant est le KHDS-02 commercialisé par la société SUMITOMO METAL MINING et qui se présente sous forme d'une poudre de couleur vert sombre, composée en poids de 10,3% de LaB₆, de 12,1% de dioxyde de zirconium et de 77,6% d'un agent dispersant (acrylique).

L'agent filtrant peut être associé aussi à au moins une phtalocyanine et/ou à des particules d'un oxyde métallique du type ATO (antimony-doped tin oxide SnO₂/Sb₂O₅) ou ITO (indium-doped tin oxide). Des exemples de phtalocyanines sont donnés dans les brevets US 6506244**,** US 6087492**,** US 5759254**,** US 6680350**,** US 5712332 ou dans la demande japonaise JP 10182995 (Nippon Shokubai).

**S'agissant de la matière colorante,** il s'agit d'un colorant organique ou d'un pigment organique ou minéral. Il s'agit de préférence d'un colorant organique soluble dans le MAM et/ou dans le comonomère pour favoriser la transparence.

A titre d'exemple, on peut utiliser les colorants suivants Macrolex Blau RR, Gelb 3G, Grün 5B, Rot G qui sont commercialisés par LANXESS.

Le système CIELAB est un standard international de mesure des couleurs. Trois paramètres L*, a* et b* sont utilisés pour définir une couleur et son intensité. Ils sont définis selon une norme ASTM E 308-01 (voir à ce propos, "Standard Practice for Computing the Colors of Objects by Using the CIE System"). L* définit la luminosité (L*=0 pour le noir, L*=100 pour le blanc), a* définit le niveau de vert ou de rouge et b* le niveau de bleu ou de jaune.

Selon une forme préférée, la matière colorante est choisie de façon à ce que L* soit compris entre.30 et 70, a* entre -15 et 0 et b* entre 0 et 30. De préférence, L* varie entre 45 et 60, a* entre -15 et -3 et b* entre 0 et 10.

**S'agissant de l'absorbeur UV,** il s'agit d'un additif qui a la propriété d'absorber les rayons UV dans la bande de longueur d'ondes 200-380 nm.

On trouve des exemples d'absorbeurs UV dans US 5256472**.** On utilise avantageusement un absorbeur UV de la famille des benzotriazoles, des oxanilidines, des 2-(1-aryl-alkylidènes)malonates ou des benzophénones. De préférence, l'absorbeur UV est choisi tel que pour une concentration dans une plaque comprise entre 1 et 10 g/m², le coefficient de transmission moyen dans la bande 300-380 nm (τ_{UV}) soit inférieur à 10%.

L'absorbeur UV pourra être éventuellement associé à au moins un composé de type HALS pour la stabilisation au vieillissement de la couleur.

A titre d'exemple, on peut utiliser le TINUVIN B3018, le TINUVIN 328 ou le TINUVIN B3018 FF (mélange TINUVIN P/TINUVIN 770) de la société CIBA SPECIALTY CHEMICALS.

**S'agissant du modifiant choc,** celui-ci se présente sous forme de fines particules multicouches de type core-shell (noyau-écorce), ayant au moins une couche élastomérique (ou molle), c'est-à-dire une couche formée d'un polymère ayant une température de transition vitreuse (Tg) inférieure à - 5°C et au moins une couche rigide (ou dure), c'est-à-dire formée d'un polymère ayant une T_{g} supérieure à 25°C.

De préférence, le polymère de T_{g} inférieure à -5°C est obtenu à partir d'un mélange de monomères comprenant de 50 à 100 parts d'au moins un (méth)acrylate d'alkyle en C₁-C₁₀, de 0 à 50 parts d'un comonomère monoinsaturé copolymérisable, de 0 à 5 parts d'un monomère réticulant copolymérisable et de 0 à 5 parts d'un monomère de greffage copolymérisable.

De préférence, le polymère de T_{g} supérieure à 25°C est obtenu à partir d'un mélange de monomères comprenant de 70 à 100 parts d'au moins un (méth)acrylate d'alkyle en C₁-C₄, de 0 à 30 parts d'un monomère monoinsaturé copolymérisable, de 0 à 5 parts d'un monomère réticulant copolymérisable et de 0 à 5 parts d'un monomère de greffage copolymérisable. De préférence, le polymère de T_{g} supérieure à 25°C a une masse moléculaire moyenne en poids exprimée en équivalents PMMA comprise entre 10000 et 1000000, avantageusement entre 50000 et 500000 g/mol.

Le (méth)acrylate d'alkyle en C₁-C₁₀ est de préférence l'acrylate de butyle, de 2-éthylhexyle, d'octyle. Le (méth)acrylate d'alkyle en C₁-C₄ est de préférence le méthacrylate de méthyle.

Le monomère monoinsaturé copolymérisable peut être un (méth)acrylate d'alkyle en C₁-C₁₀, le styrène, l'alphaméthyl styrène, le butyl styrène, l'acrylonitrile. Il s'agit de préférence du styrène ou de l'acrylate d'éthyle.

Le monomère de greffage peut être le (méth)acrylate d'allyle, le maléate de diallyle, le (méth)acrylate de crotyle.

Le monomère réticulant peut être le diméthacrylate de diéthylèneglycol, le diméthacrylate de 1,3-butylèneglycol, le diméthacrylate de 1,4-butylène glycol, le divinyl benzène, le triacrylate de triméthyolpropane (TMPTA).

Les particules multicouches peuvent être de différentes morphologies. On peut par exemple utiliser des particules du type « mou-dur » ayant un noyau élastomérique (couche interne) et une écorce rigide (couche externe). Les demandes européennes EP 0279724 A1 et EP 1061100 A1 décrivent de telles particules.

### exemple de particules du type « mou-dur » : composées

- d'un noyau mou (40% en poids) obtenu en polymérisant 99 parts d'acrylate de butyle et 1 part de méthacrylate d'allyle ; et
- d'une écorce dure (60% en poids) obtenue en polymérisant 95 parts de MMA, 5 parts d'acrylate de butyle en présence de 0,002 parts de n-dodécyle mercaptan ;
- taille des particules : 145-155 nm.

On peut aussi utiliser des particules du type «dur-mou-dur » ayant un noyau rigide, une couche intermédiaire élastomérique et une écorce rigide. Les demandes US 2004/0030046 A1 ou EP 0270865 A1 décrivent des exemples de telles particules.

### exemple de particules du type « dur-mou-dur » : composées

- d'un noyau dur (23% en poids) obtenu en polymérisant 92,7 parts de MMA, 10 parts d'acrylate d'éthyle, 0,3 part de méthacrylate d'allyle ; et
- d'une couche intermédiaire molle (47% en poids) obtenue en polymérisant 81,7 parts d'acrylate de butyle, 17 parts de styrène et 1,3 parts de méthacrylate d'allyle;
- d'une écorce dure (30% en poids) obtenue en polymérisant 96 parts de MMA et 4 parts d'acrylate d'éthyle ;
- taille des particules : 157 nm.

On peut aussi utiliser des particules du type «mou-dur-mou-dur » ayant dans l'ordre un noyau élastomérique, une couche intermédiaire rigide, une autre couche intermédiaire élastomérique et une écorce rigide. La demande française dont le N° de publication est FR-A-2446296 décrit des exemples de telles particules.

### exemple de particules du type « mou-dur-mou-dur » : composées

- d'un noyau mou (4% en poids) obtenu en polymérisant 19,1 parts d'acrylate de butyle, 4,5 parts de styrène, 0,5 part de méthacrylate d'allyle ; et
- d'une couche dure (25% en poids) obtenue en polymérisant 141 parts de MMA, 9 parts d'acrylate d'éthyle et 0,6 part de méthacrylate d'allyle;
- d'une couche molle (56% en poids) obtenue en polymérisant 266,8 parts d'acrylate de butyle, 62,5 parts de styrène, 6,7 parts de méthacrylate d'allyle ;
- d'une écorce dure (15% en poids) obtenue en polymérisant 84,6 parts de MMA et 5,4 parts d'acrylate d'éthyle ;
- taille des particules : 270 nm.

La couche élastomérique peut être aussi du type silicone comme enseignée dans les demandes US 2005/0124761 A1**.**

La taille des particules est en général inférieure au µm et avantageusement comprise entre 50 et 400 nm. Les particules multicouches sont préparées à l'aide de la polymérisation en émulsion aqueuse, en plusieurs étapes. Au cours de la 1^{ère} étape, on forme des germes autour desquels vont se constituer les couches. La taille finale des particules est déterminée par le nombre de germes qui sont formés lors de la 1^{ère} étape. Au cours de chacune des étapes suivantes, en polymérisant le mélange adéquat, on forme successivement une nouvelle couche autour des germes ou des particules de l'étape précédente. A chaque étape, la polymérisation est conduite en présence d'un amorceur radicalaire, d'un surfactant et éventuellement d'un agent de transfert. On utilise par exemple le persulfate de sodium, de potassium ou d'ammonium. Les particules une fois formées sont récupérées par coagulation ou par atomisation. Un agent antimottant peut être ajouté pour éviter que les particules ne s'agglomèrent.

Le modifiant choc permet d'améliorer la résistance à l'impact de la composition. De façon surprenante, la Demanderesse a constaté qu'il permet également d'améliorer la transparence de la composition lorsqu'il est utilisé dans le procédé coulé.

**S'agissant de l'amorceur radicalaire,** il s'agit d'un composé qui libère des radicaux libres par activation thermique. L'amorceur radicalaire peut être par exemple un peroxyde de diacyle, un peroxyester, un peroxyde de dialkyle, un peroxyacétal ou un composé azoïque.

Des amorceurs radicalaires pouvant convenir sont par exemple le carbonate d'isopropyle, le peroxyde de benzoyle, de lauroyle, de caproyle, de dicumyle, le perbenzoate de tertiobutyle, le 2-éthyl perhexanoate de tertiobutyle, l'hydroperoxyde de cumyle, le 1,1-di(tert-butylperoxy)-3,3,5-trimethylcyclohexane, le peroxyisobutyrate de tertiobutyle, le peracétate de tertiobutyle, le perpivalate de tertiobutyle, le perpivalate d'amyle, le peroctoate de tertiobutyle, l'azodiisobutyronitrile (AIBN), l'azodiisobutyramide, le 2,2'-azo-bis(2,4-diméthylvaléronitrile), le 4,4'-azo-bis(4-cyanopentanoïque. On ne sortirait pas du cadre de l'invention en utilisant un mélange d'amorceurs radicalaires choisis dans la liste ci-dessus. L'amorceur radicalaire préféré est l'azodiisobutyronitrile.

**S'agissant de l'agent transfert,** il s'agit d'un composé qui permet de réguler les masses molaires. Il s'agit par exemple de terpinolène. Il peut aussi d'un limitateur de chaîne comme le gamma-terpinène.

**S'agissant de la composition filtrante,** celle-ci comprend en poids :
- de 70 à 99,9 parts d'au moins un polymère méthacrylique ;
- de 0,1 à 30 parts d'au moins un modifiant choc sous forme de particules multicouches ;
- de 0,0001 à 1 parts d'au moins un agent filtrant;
- de 0 à 0,1 parts d'au moins une matière colorante ; et
- de 0 à 5 parts d'au moins un absorbeur UV ;
le total faisant 100 parties.

De préférence, elle comprend :
- de 80 à 99,9 parts d'au moins un polymère méthacrylique ;
- de 1 à 20 parts d'au moins un modifiant choc sous forme de particules multicouches ;
- de 0,0005 à 0,1 parts d'au moins un agent filtrant;
- de 0 à 0,1 parts d'au moins une matière colorante ; et
- de 0 à 5 parts d'au moins un absorbeur UV ;
le total faisant 100 parties.

La composition peut être obtenue en mélangeant en voie fondue le polymère méthacrylique et les différents additifs (c'est-à-dire le modifiant choc, l'agent filtrant, la matière colorante et l'absorbeur UV). On peut utiliser pour cela tout outil de mélange adapté aux thermoplastiques. De préférence, on utilise comme outil de mélange une extrudeuse. A la sortie de l'extrudeuse, on peut récupérer des granulés de la composition ou bien une plaque. La composition peut aussi être obtenue par le procédé coulé qui est décrit plus loin.

**S'agissant de la plaque,** celle-ci peut être obtenue par extrusion de la composition selon l'invention ou bien en extrudant directement les différents ingrédients de la composition (c'est-à-dire le polymère méthacrylique, l'agent filtrant, le modifiant choc,...).

De préférence, la plaque est obtenue par le procédé coulé qui consiste à introduire dans un moule une composition à polymériser, puis à placer le moule dans une enceinte thermostatée soumise à un cycle de températures adapté (on parle alors de plaque coulée). Le moule est constitué de deux plaques de verre séparées par un joint en polymère (en PVC par exemple) qui assure l'étanchéité et dont l'épaisseur détermine l'épaisseur de la plaque. L'enceinte thermostatée peut être une « piscine » chauffée ou une étuve ventilée. La polymérisation a lieu généralement dans une 1^{ère} étape à une température de l'ordre de 50-60°C pour obtenir un taux de conversion de 95% environ, puis dans une 2^{nde} étape dite de « post-polymérisation » à une température de l'ordre de 120°C. Après refroidissement, on retire du moule la plaque obtenue. La plaque a une épaisseur qui correspond à l'épaisseur du joint. Pour plus de détails sur le procédé coulé, on pourra se reporter par exemple à l'ouvrage « Le PMMA » édité par Editions Nathan Communication en pages 27-30.

La composition à polymériser comprend en poids :
- de 70 à 99,9 parts de MAM et éventuellement d'au moins un comonomère ;
- de 0,005 à 0,2 parts d'au moins un amorceur radicalaire ;
- éventuellement de 0,001 à 0,2 à parts d'au moins un agent de transfert ;
- de 0,1 à 30 parts d'au moins un modifiant choc sous forme de particules multicouches ;
- de 0,0001 à 1 parts d'au moins un agent filtrant ;
- de 0 à 0,1 parts d'au moins une matière colorante ; et
- de 0 à 5 parts d'au moins un absorbeur UV ;
le total faisant 100 parties.

De préférence, elle comprend :
- de 80 à 99,9 parts de MAM et éventuellement d'au moins un comonomère ;
- de 0,005 à 0,2 parts d'au moins un amorceur radicalaire ;
- éventuellement de 0,001 à 0,2 à parts d'au moins un agent de transfert ;
- de 1 à 20 parts d'au moins un modifiant choc sous forme de particules multicouches ;
- de 0,0005 à 0,1 parts d'au moins un agent filtrant ;
- de 0 à 0,1 parts d'au moins une matière colorante ; et
- de 0 à 5 parts d'au moins un absorbeur UV ;
le total faisant 100 parties.

La composition à polymériser peut comprendre aussi éventuellement de 0 à 0,02 parts d'au moins un agent de démoulage, comme par exemple le dioctylphtalate.

La proportion en poids de monomère(s) dans la composition à polymériser varie de 80 à 100%, avantageusement de 90 à 100%, de préférence de 98 à 100%, encore plus préférentiellement de 99 à 100% de MAM pour respectivement de 0 à 20%, avantageusement de 0 à 10%, de préférence de 0 à 2%, encore plus préférentiellement de 0 à 1% d'au moins un comonomère.

Le procédé comprend donc les étapes suivantes :
- dans une 1^{ère} étape, on prépare la composition à polymériser en mélangeant les divers ingrédients indiqués plus haut ;
- dans une 2^{ème} étape, on coule la composition à polymériser dans le moule et on la chauffe ;
- dans une 3^{ème} étape, on sépare la plaque coulée du moule.

De préférence, la composition à polymériser est obtenue en dispersant d'abord le modifiant choc dans le(s) monomère(s), éventuellement sous l'effet d'ultrasons ou d'un simple chauffage. Puis, les autres ingrédients sont ajoutés (c'est-à-dire l'agent filtrant, la matière colorante, l'absorbeur UV, ...).

De préférence, l'agent filtrant est tel que lorsqu'il est présent dans une plaque à une concentration comprise entre 0,1 et 1 g/m², le rapport τ_{E}/τ_{V} (entre le coefficient de transmission moyen mesuré entre 300 et 2500 nm selon ISO-9050 et le coefficient de transmission moyen mesuré entre 380 et 780 nm selon ISO-9050) est inférieur à 0,7, de préférence inférieur à 0,6.

De préférence, la plaque (notamment sous une épaisseur de 6 mm) présente les caractéristiques optiques suivantes :
τ_{V} (ISO-9050) allant de 18 et 24
τ_{E} (ISO-9050) inférieur à 12,2
ρ_{E} (ISO-9050) supérieur à 4,0
haze inférieur à 10

### Utilisation de la plaque

La plaque peut être utilisée dans le domaine du vitrage. Elle peut servir à la fabrication d'une vitre pour un bâtiment ou un habitacle (maison, centre commercial, cabine téléphonique, serre,...) ou d'un véhicule (voiture, camion, bateau, ...) .

Dans le vitrage automobile, il peut s'agir d'une vitre latérale, d'une vitre avant ou arrière, ou bien d'un toît transparent (voir figure 1).

Les procédés de découpe et de thermoformage permettent de transformer une plaque plane en une plaque aux dimensions et à la forme voulues.

### [Exemples]

Les coefficients de transmission et de réflexion UV visible et énergétique sont calculés en suivant la norme ISO-9050 :
taux de transmission UV (τ_{UV}): mesuré entre 300-380 nm coefficient de transmission visible (τ_{V}): entre 380-780 nm
coefficient de réflexion (ρᵥ) : entre 380-780 nm coefficient de transmission (τ_{E}) : entre 300-2500 nm coefficient de reflexion (ρ_{E}) : entre 300-2500 nm

Le haze et les paramètres L*, a* et b* sont mesurées par transmission à l'aide d'un spectrocolorimètre Spectraflash SFX650X commercialisé par Datacolor (normes ISO 14782 et ISO 7724, illuminant D65 10°).

Toutes ces mesures ont été réalisées sur une plaque d'épaisseur 6 ±0,2 mm. Pour tous les exemples, on a préparé les plaques coulées d'épaisseur 6±0,2 mm en utilisant le cycle thermique suivant: palier à 70°C pendant 6 heures, puis palier à 120°C pendant 2 heures.

On a utilisé le KHDS-02 comme agent filtrant. Le modifiant choc est introduit sous forme d'un PMMA dans lequel sont dispersées les particules de modifiant choc multicouches (teneur en modifiant choc : 50% poids, particules de type dur/mou/dur); on a utilisé plus précisément pour les exemples :
le PMMA P1 : PLEXIGLAS DR101 commercialisé par ALTUGLAS INTERNATIONAL
le PMMA P2 : PLEXIGLAS ZK6BR commercialisé par DEGUSSA-ROEHM

### Exemples 1a-1c (comparatifs)

Dans les exemples 1a-1c, on n'utilise pas d'agent filtrant.

On disperse dans du MAM des granulés du PMMA P1 et on laisse agiter mécaniquement la solution pendant 16 h à température ambiante. On ajoute ensuite de l'AIBN (soit 600 ppm par rapport au MAM), le terpinolène (82 ppm par rapport au MAM), du BDMA (600 ppm par rapport au MAM) et du TINUVIN B3018 (1000 ppm par rapport à l'ensemble de la dispersion) et on laisse la solution sous agitation mécanique pendant 4 h à température ambiante.

La dispersion ainsi obtenue est ensuite coulée dans un moule de verre puis polymérisée en suivant le cycle thermique. La plaque obtenue présente les propriétés reportées dans le tableau 1.

L'exemple 1a correspond à 0% de PMMA P1 (pas de modifiant choc), l'exemple 1b à 6% (soit 3% de modifiant choc) et l'exemple 1c à 12% (6% de modifiant choc).

**Tableau I**

| | **PMMA P1** **[%]** | **τ_{UV}** **[%]** | **τᵥ** **[%]** | **τₑ** **[%]** | **ρᵥ** **[%]** | **ρₑ** **[%]** | **haze** **[%]** | **L*** | **a*** | **b*** |
|---|---|---|---|---|---|---|---|---|---|---|
| **1a** | 0 | 0,4 | 90,3 | 80,4 | 7,3 | 6,6 | 0,9 | 97,4 | -0,04 | 0,49 |
| **1b** | 6 | 0,4 | 90,3 | 80,4 | 7,3 | 6,6 | 1,3 | 97,4 | -0,04 | 0,49 |
| 1**c** | 12 | 0,4 | 90,3 | 80,4 | 7,3 | 6,6 | 1,6 | 97,4 | -0,04 | 0,49 |

### Exemples 2a-2b (comparatifs)

Dans les exemples 2a et 2b, on n'utilise pas de modifiant choc.

On reprend les conditions des exemples 1a-1c en coulant dans le moule un mélange à base de KHDS-02. Le mélange est obtenu ainsi : une dispersion à 2% poids de KHDS-02 dans du MAM est maintenue sous agitation mécanique (exemple 2a) ou sous ultrasons (exemple 2b) pendant 4 h. On ajoute la dispersion précédente à du MAM de façon à obtenir une concentration en KHDS-02 de 700 ppm (calculés par rapport à la masse totale de dispersion) et on maintient sous agitation mécanique pendant 4 h. Puis, on ajoute l'AIBN (600 ppm par rapport au MAM), le terpinolène (82 ppm par rapport au MAM), le BDMA (600 ppm par rapport au MAM) et le TINUVIN B3018 (1000 ppm par rapport au poids total de la dispersion) et on maintient sous agitation mécanique pendant 4 h.

**Tableau 2**

| | **agitation** | **τ_{UV} [%]** | **τᵥ [%]** | **τₑ [%]** | **ρᵥ [%]** | **ρₑ [%]** | **haze** **[%]** | **L*** | **a*** | **b*** |
|---|---|---|---|---|---|---|---|---|---|---|
| **2a** | mécanique | 0,0 | 27,4 | 9,9 | 4,4 | 4,5 | 22,5 | 56,4 | -11,1 | 23,1 |
| **2b** | ultrasons | 0,0 | 27,4 | 9,9 | 4,4 | 4,5 | 17,6 | 65,1 | -11,5 | 24,1 |

### Exemples 3a-3d (selon l'invention)

Dans les exemples 3a-3d, on utilise à la fois un agent filtrant et un modifiant choc.

On disperse le PMMA P1 (utilisé dans les exemples 1) dans du MAM et on laisse agiter pendant 24 h à température ambiante. On ajoute ensuite le KHDS-02 (700 ppm par rapport à la masse totale de dispersion), ainsi que l'AIBN (600 ppm par rapport au MAM), le terpinolène (82 ppm par rapport au MAM), le BDMA (600 ppm par rapport au MAM) et le TINUVIN B3018 (1000 ppm par rapport au poids total de dispersion) et on laisse sous agitation mécanique pendant 4h. La dispersion ainsi obtenue est alors coulée dans une moule de verre puis polymérisée en suivant le cycle thermique.

**Tableau 3**

| | **PMMAP1** | **τ_{UV}[%]** | **τᵥ[%]** | **τₑ[%]** | **ρᵥ[%]** | **ρₑ[%]** | **haze** **[%]** | **L*** | **a*** | **b*** |
|---|---|---|---|---|---|---|---|---|---|---|
| **3a** | 3 | 0,0 | 27,4 | 9,9 | 4,4 | 4,5 | 9,1 | 63,3 | -11,5 | 26,6 |
| **3b** | 6 | 0,0 | 27,4 | 9,9 | 4,4 | 4,5 | 11,6 | 62,4 | -11,4 | 26,6 |
| **3c** | 9 | 0,0 | 27,4 | 9,9 | 4,4 | 4,5 | 17,5 | 63,0 | -11,1 | 25,1 |
| **3d** | 12 | 0,0 | 27,4 | 9,9 | 4,4 | 4,5 | 29,9 | 64,4 | -10,0 | 22,2 |

### Exemples 4a-4f

Dans les exemples 3a-3d, on utilise à la fois un agent filtrant et le PMMA P2.

On reprend les conditions des exemples 3 mais on utilise 12% du PMMA P2. La teneur en KHDS-02 est variable.

**Tableau 4**

| | **KHDS-02** **[ppm]** | **τ_{UV} [%]** | **τᵥ [%]** | **τₑ [%]** | **ρᵥ [%]** | **ρₑ [%]** | **haze** **[%]** | **L*** | **a*** | **b*** |
|---|---|---|---|---|---|---|---|---|---|---|
| **7a** | 23 | 0,0 | 87,2 | 73,3 | 7,2 | 6,6 | 1,9 | 95,8 | -1,0 | 0,5 |
| **7b** | 230 | 0,0 | 60,8 | 32,9 | 5,7 | 4,9 | 2,9 | 84,4 | -7,7 | 11,2 |
| **7c** | 500 | 0,0 | 50,4 | 24,6 | 5,3 | 4,7 | 4,3 | 80,1 | -8,7 | 13,4 |
| **7d** | 600 | 0,0 | 32,6 | 12,4 | 4,6 | 4,6 | 5,4 | 64,8 | -13,1 | 22,4 |
| **7e** | 700 | 0,0 | 27,4 | 9,9 | 4,4 | 4,5 | 6,3 | 60,7 | -13,6 | 24,2 |
| **7f** | 1000 | 0,0 | 15,8 | 5,2 | 4,3 | 4,4 | 7,8 | 47,8 | -14,2 | 28,1 |

### Exemple 5 (selon l'invention)

Dans cet exemple, on utilise un agent filtrant, un modifiant choc et une matière colorante.

On disperse 12% de PMMA P2 dans le MAM et on laisse agiter la dispersion pendant 16 h à température ambiante. On ajoute ensuite 400 ppm de KHDS-02 (calculés par rapport à la masse totale de dispersion), puis les additifs colorants (Macrolex Blau RR, Gelb 3G, Grün 5B, Rot G commercialisés par BASF). Puis, on ajoute 600 ppm d'AIBN (par rapport au MAM), 82 ppm de terpinolène (par rapport au MAM), 600 ppm de BDMA (par rapport au MAM) et 1000 ppm (calculés sur la masse totale de la dispersion) de Tinuvin B3018 à la dispersion maintenue sous agitation mécanique pendant 4 h de plus.

La dispersion ainsi obtenue est alors coulée dans une moule de verre puis polymérisée en suivant le cycle thermique.

**Tableau 5**

| | **τ_{UV}[%]** | **τᵥ [%]** | **τₑ [%]** | **ρᵥ [1%]** | **ρₑ [%]** | **haze** **[%]** | **L*** | **a*** | **b*** |
|---|---|---|---|---|---|---|---|---|---|
| **5** | 0,0 | 17,5 | 11,8 | 4,1 | 4,2 | 7,4 | 50,2 | -11.1 | 3.6 |

## Revendications

1. Composition transparente filtrant les rayons du proche infrarouge comprenant en poids :
• de 70 à 99,9 parts d'au moins un polymère méthacrylique ;
• de 0,1 à 30 parts d'au moins un modifiant choc sous forme de particules multicouches ;
• de 0,0001 à 1 parts d'au moins un agent filtrant choisi dans la famille des borures des éléments suivants : La, Pr, Nd, Ce, Gd, Tb, Dy, Ho, Y, Sm, Eu, Er, Tm, Yb, Lu, Sr, Ca, Ti, Zr, Hf, V, Nb, Ta, Cr, Mo et W ;
• de 0 à 0,1 parts d'au moins une matière colorante ; et
• de 0 à 5 parts d'au moins un absorbeur UV ;
le total faisant 100 parties.

2. Composition selon la revendication 1 comprenant en poids :
• de 80 à 99,9 parts d'au moins un polymère méthacrylique ;
• de 1 à 20 parts d'au moins un modifiant choc sous forme de particules multicouches;
• de 0,0005 à 0,1 parts d'au moins un agent filtrant choisi dans la famille des borures des éléments suivants : La, Pr, Nd, Ce, Gd, Tb, Dy, Ho, Y, Sm, Eu, Er, Tm, Yb, Lu, Sr, Ca, Ti, Zr, Hf, V, Nb, Ta, Cr, Mo et W ;
• de 0 à 0,1 parts d'au moins une matière colorante ; et
• de 0 à 5 parts d'au moins un absorbeur UV
le total faisant 100 parties.

3. Composition selon l'une des revendications 1 ou 2 **caractérisée en ce que** l'agent filtrant est l'hexaborure de lanthane (LaB₆).

4. Composition selon l'une quelconque des revendications précédentes **caractérisée en ce que** la taille des particules de l'agent filtrant est avantageusement inférieure à 200 nm, de préférence inférieure à 100 nm et encore plus préférentiellement comprise entre 1 et 50 nm.

5. Composition selon l'une quelconque des revendications précédentes **caractérisée en ce que** l'agent filtrant est associé à au moins une phtalocyanine et/ou à des particules d'un oxyde métallique du type ATO (antimony-doped tin oxide SnO₂/Sb₂O₅) ou ITO (indium-doped tin oxide).

6. Composition selon l'une quelconque des revendications précédentes **caractérisée en ce que** le polymère méthacrylique comprend en poids de 80 à 100%, avantageusement de 90 à 100%, de préférence de 98 à 100%, encore plus préférentiellement de 99 à 100% de MAM pour respectivement de 0 à 20%, avantageusement de 0 à 10%, de préférence de 0 à 2%, encore plus préférentiellement de 0 à 1% d'au moins un comonomère ayant au moins une insaturation éthylénique copolymérisable avec le MAM par un mécanisme radicalaire.

7. Composition selon l'une quelconque des revendications précédentes **caractérisée en ce qu'**elle se présente sous forme de plaque.

8. Plaque transparente filtrant les rayons du proche infrarouge obtenue à partir de la composition selon l'une quelconque des revendications 1 à 6.

9. Plaque selon la revendication 8 **caractérisée en ce qu'**elle est obtenue par le procédé coulé.

10. Plaque selon l'une des revendications 8 ou 9 **caractérisée en ce qu'**elle est obtenue par le procédé qui comprend les étapes suivantes :
• dans une 1^{ère} étape, on prépare une composition à polymériser comprenant en poids de 70 à 99,9 parts de MAM et éventuellement d'au moins un comonomère ; de 0,005 à 0,2 parts d'au moins un amorceur radicalaire ; éventuellement de 0,001 à 0,2 à parts d'au moins un agent de transfert ; de 0,1 à 30 parts d'au moins un modifiant choc sous forme de particules multicouches ; de 0,0001 à 1 parts d'au moins un agent filtrant ; de 0 à 0,1 parts d'au moins une matière colorante ; et de 0 à 5 parts d'au moins un absorbeur UV ; le total faisant 100 parties. ;
• dans une 2^{ème} étape, on coule la composition à polymériser dans le moule et on la chauffe ;
• dans une 3^{ème} étape, on sépare la plaque coulée du moule.

11. Utilisation d'une plaque selon l'une quelconque des revendications 8 à 10 dans le domaine du vitrage.

12. Utilisation d'une plaque selon l'une quelconque des revendications 8 à 11 pour fabriquer une vitre latérale, une vitre avant ou arrière ou bien un toît transparent d'automobile.

## Claims

1. Transparent composition for screening out near infrared rays comprising, by weight:
• from 70 to 99.9 parts of at least one methacrylic polymer;
• from 0.1 to 30 parts of at least one impact modifier in the form of multilayer particles;
• from 0.0001 to 1 part of at least one screening agent chosen from the family of the borides of the following elements: La, Pr, Nd, Ce, Gd, Tb, Dy, Ho, Y, Sm, Eu, Er, Tm, Yb, Lu, Sr, Ca, Ti, Zr, Hf, V, Nb, Ta, Cr, Mo and W;
• from 0 to 0.1 part of at least one colouring material; and
• from 0 to 5 parts of at least one UV absorber;
the total forming 100 parts.

2. Composition according to Claim 1 comprising, by weight:
• from 80 to 99.9 parts of at least one methacrylic polymer;
• from 1 to 20 parts of at least one impact modifier in the form of multilayer particles;
• from 0.0005 to 0.1 part of at least one screening agent chosen from the family of the borides of the following elements: La, Pr, Nd, Ce, Gd, Tb, Dy, Ho, Y, Sm, Eu, Er, Tm, Yb, Lu, Sr, Ca, Ti, Zr, Hf, V, Nb, Ta, Cr, Mo and W;
• from 0 to 0.1 part of at least one colouring material; and
• from 0 to 5 parts of at least one UV absorber;
the total forming 100 parts.

3. Composition according to either of Claims 1 and 2, **characterized in that** the screening agent is lanthanum hexaboride (LaB₆) .

4. Composition according to any one of the preceding claims, **characterized in that** the size of the particles of the screening agent is advantageously less than 200 nm, preferably less than 100 nm and more preferably still between 1 and 50 nm.

5. Composition according to any one of the preceding claims, **characterized in that** the screening agent is used in combination with at least one phthalocyanine and/or with particles of a metal oxide of the ATO (antimony-doped tin oxide SnO₂/Sb₂O₅) or ITO (indium-doped tin oxide) type.

6. Composition according to any one of the preceding claims, **characterized in that** the methacrylic polymer comprises, by weight, from 80 to 100%, advantageously from 90 to 100%, preferably from 98 to 100%, more preferably still from 99 to 100%, of MMA for respectively from 0 to 20%, advantageously from 0 to 10%, preferably from 0 to 2%, more preferably still from 0 to 1%, of at least one comonomer having at least one ethylenic unsaturation which can copolymerize with the MMA by a radical mechanism.

7. Composition according to any one of the preceding claims, **characterized in that** it is provided in the form of a sheet.

8. Transparent sheet for screening out near infrared rays obtained from the composition according to any one of Claims 1 to 6.

9. Sheet according to Claim 8, **characterized in that** it is obtained by the casting process.

10. Sheet according to either of Claims 8 and 9, **characterized in that** it is obtained by the process which comprises the following stages:
• in a 1st stage, a composition to be polymerized is prepared comprising, by weight, from 70 to 99.9 parts of MMA and optionally of at least one comonomer; from 0.005 to 0.2 part of at least one radical initiator; optionally from 0.001 to 0.2 part of at least one transfer agent; from 0.1 to 30 parts of at least one impact modifier in the form of multilayer particles; from 0.0001 to 1 part of at least one screening agent; from 0 to 0.1 part of at least one colouring material; and from 0 to 5 parts of at least one UV absorber; the total forming 100 parts;
• in a 2nd stage, the composition to be polymerized is cast in the mould and is heated;
• in a 3rd stage, the cast sheet is separated from the mould.

11. Use of a sheet according to any one of Claims 8 to 10 in the field of glazing.

12. Use of a sheet according to any one of Claims 8 to 11 in the manufacture of a side window, a front or rear window or else a transparent roof for a motor vehicle.

## Patentansprüche

1. Nahinfrarotstrahlen filternde transparente Zusammensetzung, enthaltend, bezogen auf das Gewicht:
• 70 bis 99,9 Teile mindestens eines Methacrylpolymers;
• 0,1 bis 30 Teile mindestens eines Schlagzähigkeitsmodifikators in Form von mehrschichtigen Teilchen;
• 0,0001 Teile bis 1 Teil mindestens eines Filtermittels aus der Familie der Boride der folgenden Elemente: La, Pr, Nd, Ce, Gd, Tb, Dy, Ho, Y, Sm, Eu, Er, Tm, Yb, Lu, Sr, Ca, Ti, Zr, Hf, V, Nb, Ta, Cr, Mo und W;
• 0 bis 0,1 Teile mindestens einer farbgebenden Substanz und
• 0 bis 5 Teile mindestens eines UV-Absorbers;
wobei sich die Summe auf 100 Teile beläuft.

2. Zusammensetzung nach Anspruch 1, enthaltend, bezogen auf das Gewicht:
• 80 bis 99,9 Teile mindestens eines Methacrylpolymers;
• 1 bis 20 Teile mindestens eines Schlagzähigkeitsmodifikators in Form von mehrschichtigen Teilchen;
• 0,0005 bis 0,1 Teile mindestens eines Filtermittels aus der Familie der Boride der folgenden Elemente: La, Pr, Nd, Ce, Gd, Tb, Dy, Ho, Y, Sm, Eu, Er, Tm, Yb, Lu, Sr, Ca, Ti, Zr, Hf, V, Nb, Ta, Cr, Mo und W;
• 0 bis 0,1 Teile mindestens einer farbgebenden Substanz und
• 0 bis 5 Teile mindestens eines UV-Absorbers;
wobei sich die Summe auf 100 Teile beläuft.

3. Zusammensetzung nach Anspruch 1 oder 2, **dadurch gekennzeichnet, daß** es sich bei dem Filtermittel um Lanthanhexaborid (LaB₆) handelt.

4. Zusammensetzung nach einem der vorhergehenden Ansprüche, **dadurch gekennzeichnet, daß** die Größe der Filtermittelteilchen vorteilhafterweise unter 200 nm, vorzugsweise unter 100 nm und noch weiter bevorzugt zwischen 1 und 50 nm liegt.

5. Zusammensetzung nach einem der vorhergehenden Ansprüche, **dadurch gekennzeichnet, daß** das Filtermittel mit mindestens einem Phthalocyanin und/oder Teilchen eines Metalloxids des ATO-Typs (antimondotiertes Zinnoxid Sn0_{2/}Sb₂O₅) oder ITO-Typs (indiumdotiertes Zinnoxid) kombiniert ist.

6. Zusammensetzung nach einem der vorhergehenden Ansprüche, **dadurch gekennzeichnet, daß** das Methacrylpolymer, bezogen auf das Gewicht, 80 bis 100%, vorteilhafterweise 90 bis 100%, vorzugsweise 98 bis 100% und noch weiter bevorzugt 99 bis 100% MMA für respektive 0 bis 20%, vorteilhafterweise 0 bis 10%, vorzugsweise 0 bis 2% und noch weiter bevorzugt 0 bis 1% mindestens eines mit MMA nach einem radikalischen Mechanismus copolymerisierbaren Comonomers mit mindestens einer ethylenischen Ungesättigtheit umfaßt.

7. Zusammensetzung nach einem der vorhergehenden Ansprüche, **dadurch gekennzeichnet, daß** sie in Plattenform vorliegt.

8. Nahinfrarotstrahlen filternde transparente Platte, erhalten aus der Zusammensetzung nach einem der Ansprüche 1 bis 6.

9. Platte nach Anspruch 8, **dadurch gekennzeichnet, daß** sie nach dem Gießverfahren erhalten wird.

10. Platte nach Anspruch 8 oder 9, **dadurch gekennzeichnet, daß** sie durch ein Verfahren erhalten wird, bei dem man:
• in einem ersten Schritt eine zu polymerisierende Zusammensetzung herstellt, die, bezogen auf das Gewicht, 70 bis 99,9 Teile MMA und gegebenenfalls mindestens ein Comonomer; 0,005 bis 0,2 Teile mindestens eines radikalischen Initiators; gegebenenfalls 0,001 bis 0,2 Teile mindestens eines Übertragungsmittels; 0,1 bis 30 Teile mindestens eines Schlagzähigkeitsmodifikators in Form von mehrschichtigen Teilchen; 0,0001 Teile bis 1 Teil mindestens eines Filtermittels; 0 bis 0,1 Teile mindestens einer farbgebenden Substanz und 0 bis 5 Teile mindestens eines UV-Absorbers umfaßt; wobei sich die Summe auf 100 Teile beläuft;
• in einem zweiten Schritt die zu polymerisierende Zusammensetzung in die Form gießt und erhitzt und
• in einem dritten Schritt die gegossene Platte aus der Form nimmt.

11. Verwendung einer Platte nach einem der Ansprüche 8 bis 10 auf dem Gebiet der Verglasung.

12. Verwendung einer Platte nach einem der Ansprüche 8 bis 11 zur Herstellung eines Seitenfensters, eines Front- oder Heckfensters oder eines transparenten Dachs für ein Auto.
